# EUROPÄISCHE PATENTANMELDUNG

(11) **EP 1 467 574 A1**
(43) Veröffentlichungstag der Anmeldung: **13.10.2004**
(21) Anmeldenummer: 03405242.3
(22) Anmeldetag: 09.04.2003
(51) Int. Cl.: H04Q 3/62, H04M 3/42

(54) **Verfahren zum Betrieb einer privaten Teilnehmervermittlungsanlage und private Teilnehmervermittlungsanlage**

(71) Anmelder: Aastra Technologies Limited, Concord, Ontario L4K 4N9 (CA)
(72) Erfinder: Hiller, Frank, 4500 Solothurn (CH)
(74) Vertreter: Rutz, Peter

(57) **Zusammenfassung**

Das erfindungsgemässe Verfahren dient dem Betrieb einer mit einem digitalen Koppelfeld (XCS) versehenen privaten Teilnehmervermittlungsanlage (PBX), die einerseits mittels einer Netz-Peripherie (NP) an wenigstens ein externes Kommunikationsnetz, wie das Dienste integrierende öffentliche Telekommunikationsnetz ISDN und/oder das Internet, und andererseits mittels einer Benutzer-Peripherie (BP) an draht gebundene oder schnurlose Teilnehmerendeinrichtungen (TE_{C},..., TE_{CL} ...) angeschlossen ist. Erfindungsgemäss ist ein einheitliches Protokoll (UP) vorgesehen, mittels dessen der Aufbau und der Abbau der Verbindungen innerhalb der Benutzer-Peripherie (BP), des digitalen Koppelfeldes (XCS) und der Netz-Peripherie (NP) realisierbar sind. In einer bevorzugten Ausgestaltung weist die private Teilnehmervermittlungsanlage ein erstes Anlagenteil (PBX1-2) auf, in dem ein Prozessor (PR1), wenigstens eine Teilnehmeranschlusseinheit und das digitale Koppelfeld (XCS) vorgesehen sind. Ferner weist die private Teilnehmervermittlungsanlage ein zweites Anlagenteil (PBX2-2) auf, in der ein Prozessor (PR2) und wenigstens eine Baugruppe vorgesehen sind, die an das externe Kommunikationsnetz anschliessbar ist. Die beiden Anlagenteile (PBX1-2; PBX2-2) weisen je eine erste bzw. zweite Anschlussvorrichtung (C1-2; C2-2) auf, die mittels einer drahtlosen oder drahtgebundenen Kommunikationsverbindung (LINK) miteinander verbunden sind, über die Anwenderdaten und der Signalisierung dienende Dienstprimitive mit zugehörigen Argumenten übertragbar sind.

## Beschreibung

Die Erfindung betrifft ein Verfahren zum Betrieb einer privaten Teilnehmervermittlungsanlage sowie eine private Teilnehmervermittlungsanlage nach dem Oberbegriff des Patentanspruchs 1 bzw. 8.

Private Teilnehmervermittlungsanlagen oder Nebenstellenanlagen, im englischen Sprachgebrauch als Private Branch Exchange (PBX) oder Private Automatic Branch Exchange (PABX) bezeichnet, sind private Vermittlungseinrichtungen, an die eine oder mehrere Teilnehmerendeinrichtungen über Teilnehmeranschlussleitungen angeschlossen werden und die durch eine oder mehrere Hauptanschlussleitungen mit dem öffentlichen Fernmeldenetz verbunden sind. Wie in [1], Jerry D. Gibson, THE COMMUNICATIONS HANDBOOK, CRC PRESS, Boca Raton 1997, Seite 440-442, beschrieben, entspricht die private Teilnehmervermittlungsanlage oder Nebenstellenanlage, die normalerweise innerhalb des Gebäudes ihres Anwenders installiert wird, funktionell weitgehend einer öffentlichen Teilnehmervermittlungsanlage (siehe [2}, Peter Bocker, ISDN-Digitale Netze für Sprach-, Text-, Daten-, Video- und Multimediakommunikation, Springer Verlag, Heidelberg 1997, 4. Auflage, Seiten 179-190, insbesondere Seite 182, Bild 5.12 und Seiten 196-197, insbesondere Bild 6.2.

Die private Teilnehmervermittlungsanlage wird normalerweise innerhalb des Gebäudes ihres Anwenders installiert und erlaubt den Anschluss von wenigen bis zu einigen hundert drahtgebunden oder drahtlos (cordless) arbeitenden Teilnehmerendeinrichtungen, für die ein Nummerierungsplan vorgesehen ist, in dem jeder Teilnehmerendeinrichtung eine individuelle Rufnummer zugeordnet ist.

Wie in [2}, Seite 182, Bild 5.12 gezeigt, sind Teilnehmervermittlungsanlagen traditionell modular aufgebaut mit typischerweise auf mehreren in einem Gehäuse integrierten Hardwareeinheiten (Anschlussbaugruppen, Vermittlungseinheiten, etc.) realisierten Funktionsmodulen, die nach einer Vielzahl von standardisierten Telekommunikationsprotokollen (z.B. Benutzersignalisierungsprotokolle DSS1 (Q.931, Basis Call Control und Q.950 Serie, Supplementary Services) arbeiten, wie sie in [2], Seite 16, Bild 2.2 aufgelistet sind. Insbesondere sind auch die an die private Teilnehmervermittlungsanlage angeschlossenen Teilnehmerendeinrichtungen durch entsprechende, standardisierte oder proprietäre Protokolle zu unterstützen.

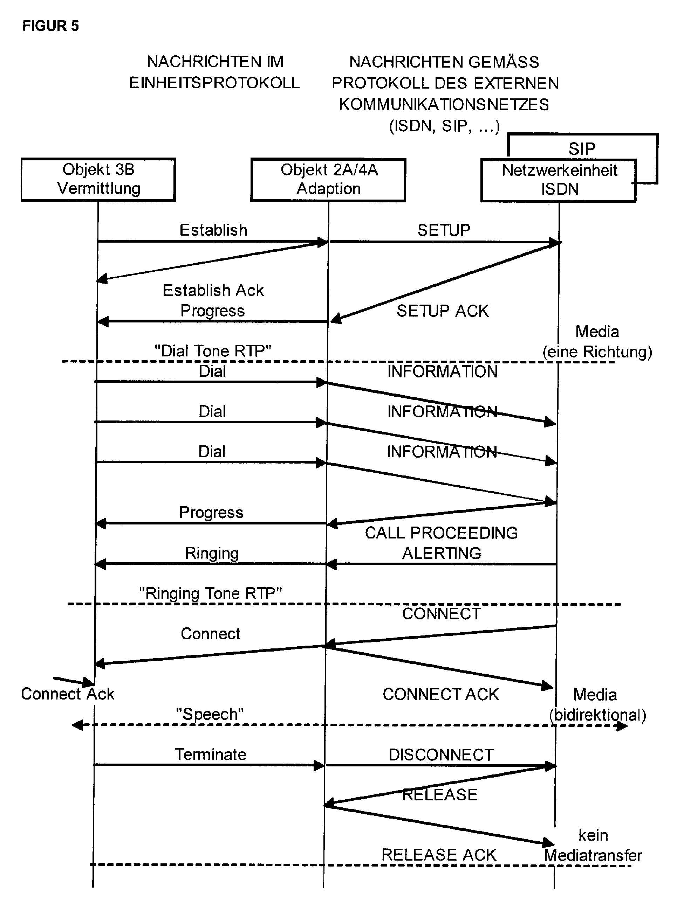

Moderne private Teilnehmervermittlungsanlagen unterstützen beispielsweise nach dem DECT-Standard arbeitende Schnurlos- (Cordless) Endgeräte und weisen dazu einen Fixed Part mit mehreren Radio Frequency Parts auf (siehe [3], B. Walke, Mobilfunknetze und ihre Protokolle, Band 2, B.G. Teubner Verlag, Stuttgart 2000, 2. Auflage, Seite 129, Abbildung 5.12).

Moderne private Teilnehmervermittlungsanlagen unterstützen ferner so genannte Voice over IP-Lösungen, wie sie in [4], Sean Christensen, Voice over IP solutions, Part Number 200011-002 06-01, Juniper Networks, Sunnyvale 2001, beschrieben sind, und verfügen dazu über die notwendigen Protokolleinheiten (H.323 Protokoll, siehe [4], Seite 15, Real Time Transport Protokoll, RFC 1889, RFC 1890, siehe [4], Seite 17; Media Gateway Protokoll, RFC 2705, siehe [4], Seite 18; Session Initiation Protokoll SIP, RFC 2543, siehe [4], Seite 19; oder MEGACO/H.248 Protokoll, siehe [4], Seite 22). Die "Voice over IP" Technologie ist ferner in [5], Douglas E. Comer, INTERNETWORKING with TCP/IP, PRINCIPLES, PROTOCOLS, AND ARCHITECTURES, 4th EDITION, Prentice Hall 2000, Kapitel 29, Seiten 539-551.

Wie in [6], F. Bergmann/H.-J. Gerhardt, Taschenbuch der Telekommunikation, Fachbuchverlag Leipzig, München 1999, Seite 301 beschrieben, ist es mit Hilfe dieser Modularität möglich selbstständige Ortsvermittlungsstellen bzw. öffentliche Teilnehmervermittlungsanlagen und somit auch systemähnliche private Teilnehmervermittlungsanlagen zu realisieren.

Gemäss [7], Wolf-Dieter Haaß, Handbuch der Kommunikationsnetze, Springer Verlag, Berlin 1997, Kapitel 3.2.2; Seite 121, ist ein Protokoll (protocol) eine Übermittlungsvorschrift, die die Aufgabe erfüllt, die Gesamtheit von Steuerungsverfahren und Betriebsvorschriften darzulegen, nach denen die Datenübertragung in einem Übertragungsabschnitt erfolgt. Dazu gehören Informationen wie der Code, die Übertragungsart, die Übertragungsrichtung, das Übertragungsformat, der Verbindungsaufbau, der Verbindungsabbau, etc.. Die Protokolle ermöglichen die Kommunikation zwischen Diensten gleicher Schichten, den so genannten peer-to-peer Protokollen. Die Abwicklung der Kommunikation zwischen den Schichten erfolgt bis auf die erste Schicht nur logisch. Die Kommunikation zwischen unterschiedlichen Schichten bzw. Instanzen erfolgt über Dienstprimitive (primitives) im Dienstprotokoll zwischen der (N)-Schicht und der (N+1)- sowie (N-1)-Schicht.

Für die Übertragung von Nachrichten zwischen Protokolleinheiten wird, wie in [6], Seiten 321-329 beschrieben, normalerweise die Abstract Syntax Notation One (ASN.1; siehe ISO Standard 8822) verwendet, mittels der Datentypen und Werte beschreibbar sind.

Zur Kommunikation innerhalb eines modular aufgebauten Systems zwischen Einheiten mit unterschiedlichem Protokollaufbau werden zudem so genannte Interworking Units (IWU) benötigt, welche Brücken zwischen den Protokollstapeln der betreffenden Einheiten bilden und beispielsweise Datenformate, Adressierungen, Verbindungsarten und Übertragungsgeschwindigkeiten aneinander anpassen. Beispielsweise wird in einer privaten Teilnehmervermittlungsanlage, die Verbindungen zu DECT-Endgeräten durchschalten kann, eine Interworking Unit vorgesehen, die, wie in [3]. Seite 191, Abbildung 5.60 gezeigt, einen ISDN-Protokollstapel mit einem DECT- Protokollstapel verbindet. In [7], Seite 181 sind Interworking Units für das Internet beschrieben.

Aufgrund des modularen Aufbaus können daher komplexe Systeme gebaut werden, deren Module jeweils von Spezialisten gewartet und erweitert werden.

Wie [5], Kapitel 11.10, Seite 192, erläutert, kann Software, die basierend auf einer streng modular geschichteten Protokollarchitektur geschaffen wurde, jedoch ausserordentlich ineffizient sein.

In privaten Teilnehmervermittlungsanlagen hat der streng modulare Aufbau ferner zur Folge, dass bei der Einführung neuer Leistungsmerkmale, die beispielsweise für die drahtgebundenen und drahtlosen Endgeräte realisiert werden sollen, jeweils eine Vielzahl von Modulen durch die betreffenden Spezialisten zu überarbeiten und die intermodularen Kommunikationsverfahren entsprechend anzupassen sind, was mit einem entsprechenden Aufwand verbunden ist.

Im Gegensatz zum zumindest funktional modularen Aufbau einer privaten Teilnehmervermittlungsanlage werden deren Baugruppen in einem einzigen Gehäuse zusammengefasst. Vorzugsweise wird die private Teilnehmervermittlungsanlage so nahe wie möglich bei den daran angeschlossenen Teilnehmerendeinrichtungen installiert, so dass ein möglichst geringer Installationsaufwand resultiert. Dabei ist jedoch zu beachten, dass für den Anschluss der privaten Teilnehmervermittlungsanlage an das Stromversorgungsnetz und das externe Telekommunikationsnetz die dafür benötigten Leitungen bis zum Installationsstandort gezogen werden müssen. Dies ist insbesondere dann mit einem hohen Aufwand verbunden, wenn das Gebäude, in dem die private Teilnehmervermittlungsanlage zu installieren ist, nicht mit den notwendigen Kabelkanälen versehen ist. Insbesondere treten die beschriebenen Probleme auf, wenn in einem Altbau eine neue Kommunikationslösung zu installieren ist.

Der vorliegenden Erfindung liegt daher die Aufgabe zugrunde, ein verbessertes Verfahren für den Betrieb einer privaten Teilnehmervermittlungsanlage und eine verbesserte private Teilnehmervermittlungsanlage anzugeben.

Insbesondere sollen ein Verfahren für eine private Teilnehmervermittlungsanlage und eine private Teilnehmervermittlungsanlage angegeben werden, welche mit reduziertem Aufwand hergestellt, installiert und gewartet, gegebenenfalls funktionell erweitert werden können.

Die Lösung dieser Aufgabe gelingt mit einem Verfahren für eine private Teilnehmervermittlungsanlage und einer privaten Teilnehmervermittlungsanlage nach Anspruch 1 bzw. 8. Vorteilhafte Ausgestaltungen der Erfindung sind in weiteren Ansprüchen angegeben.

Das erfindungsgemässe Verfahren dient dem Betrieb einer mit einem digitalen Koppelfeld versehenen privaten Teilnehmervermittlungsanlage, die einerseits mittels einer Netz-Peripherie an wenigstens ein externes Kommunikationsnetz, wie das Dienste integrierende öffentliche Telekommunikationsnetz ISDN und/oder das Internet, und andererseits mittels einer Benutzer-Peripherie an drahtgebundene oder schnurlose Teilnehmerendeinrichtungen angeschlossen ist. Erfindungsgemäss ist ein einheitliches Protokoll vorgesehen, mittels dessen der Aufbau und der Abbau der Verbindungen innerhalb der Benutzer-Peripherie, des digitalen Koppelfeldes und der Netz-Peripherie realisierbar sind.

Durch die Verwendung eines Einheitsprotokolls resultiert die Vermeidung einer vielschichtigen Protokollarchitektur mit verschiedenen Protokollstapeln und dazwischen geschalteten Interworkingeinheiten oder Gateways. Das verwendete Einheitsprotokoll wird vorzugsweise mittels eines prozess- oder objektorientierten Programms implementiert, welches für eine von einer lokalen Teilnehmerendeinrichtung initialisierte Verbindungsanforderung
a) Programmelemente wie Prozeduren, Funktionen oder Objekte einer ersten, der Benutzer-Peripherie zugeordneten Klasse verwendet bzw. instantiiert, welche über Programmelemente einer dritten, der Steuerung des digitalen Koppelfeldes zugeordneten Klasse
a1) mit Programmelementen einer zweiten, der Netz-Peripherie zugeordneten Klasse oder
a2) weiteren Programmelementen einer ersten Klasse derart kommuniziert,
dass für die normalerweise bidirektionale Übertragung der Anwenderdaten von der rufenden Teilnehmerendeinrichtung zum externen Kommunikationsnetz oder zu einer weiteren Teilnehmerendeinrichtung ein durch das digitale Koppelfeld verlaufender Übertragungskanal erstellt wird.

Für eine von einer an das externe Kommunikationsnetz angeschlossenen Teilnehmerendeinrichtung initialisierte Verbindungsanforderung verwendet das auf dem Einheitsprotokoll basierende prozess- oder objektorientierte Programm
b) Programmelemente der zweiten, der Netz-Peripherie zugeordneten Klasse, welches über Programmelemente der dritten, der Steuerung des digitalen Koppelfeldes zugeordneten Klasse mit Programmelementen der ersten, der Benutzer-Peripherie zugeordneten Klasse derart kommuniziert, dass für die normalerweise bidirektionale Übertragung der Anwenderdaten vom externen Kommunikationsnetz zu einer Teilnehmerendeinrichtung ein durch das digitale Koppelfeld verlaufender Übertragungskanal erstellt wird.

Der Aufbau und Abbau von Verbindungen zwischen der Benutzer-Peripherie und der Netz-Peripherie kann daher durch das auf dem Einheitsprotokoll basierende, prozess- oder objektorientierte Programm realisiert werden, ohne dass innerhalb der verschiedenen Bereiche der privaten Teilnehmervermittlungsanlage Protokollanpassungen mittels Interworking-Einheiten notwendig sind.

Der Unterhalt und die Erweiterung der in der privaten Teilnehmervermittlungsanlage implementierten Softwaremodule können daher mit geringem Aufwand realisiert werden. Änderungen, die den Aufbau und Abbau von Verbindungen zwischen der Benutzer-Peripherie und der Netz-Peripherie betreffen, werden zentral durch eine Anpassung des Einheitsprotokolls erledigt. Die weiteren Modifikationen der Programmelementklassen bzw. Objektklassen betreffen daher nur noch allfällige Änderungen der Eigenschaften der dadurch repräsentierten Hard- und Softwareeinrichtungen.

Für die Anpassung an das externe Kommunikationsnetz oder Teilnehmerendeinrichtungen sind gegebenenfalls Anpassungen vorzunehmen, die realisiert werden, indem
a) die Kommunikation zwischen den instanziierten Objekten der zweiten Klasse und dem externen Kommunikationsnetz über instanziierte Objekte einer vierten Klasse erfolgt, welche peer-to-peer mit Einheiten des externen Kommunikationsnetzes kommunizieren und
b1) die Kommunikation zwischen den instanziierten Objekten der ersten Klasse und den Teilnehmerendeinrichtungen über instanziierte Objekte einer fünften Klasse erfolgt, welche die betreffenden Teilnehmerendeinrichtungen repräsentieren oder
b2) die Kommunikation zwischen den instanziierten Objekten der ersten Klasse und den Teilnehmerendeinrichtungen über instanziierte Objekte der fünften Klasse und einer sechsten Klasse erfolgt, welche peer-to-peer mit den betreffenden Teilnehmerendeinrichtungen oder dazwischen geschalteten Netzwerkeinheiten kommunizieren.

Sofern die verwendeten Teilnehmerendeinrichtungen bereits auf dem Einheitsprotokoll basieren, also proprietär konzipiert sind, können diese mit reduziertem Aufwand gesteuert werden.

In einer bevorzugten Ausgestaltung weist die private Teilnehmervermittlungsanlage ein erstes Anlagenteil auf, in dem ein Prozessor, wenigstens eine Teilnehmeranschlusseinheit und das digitale Koppelfeld vorgesehen sind. Ferner weist die private Teilnehmervermittlungsanlage ein zweites Anlagenteil auf, in der ein Prozessor und wenigstens eine Baugruppe vorgesehen sind, die an das externe Kommunikationsnetz anschliessbar ist. Die beiden Anlagenteile weisen je eine erste bzw. zweite Anschlussvorrichtung auf, die mittels einer drahtlosen oder drahtgebundenen Kommunikationsverbindung miteinander verbunden sind, über die Anwenderdaten und der Signalisierung dienende Dienstprimitive mit zugehörigen Argumenten übertragbar sind.

In beiden Anlagenteilen ist daher ein auf dem Einheitsprotokoll basierendes prozess- oder objektorientiertes Programm vorgesehen. Die Programmelemente der ersten, dritten, fünften und sechsten Klasse, soweit vorhanden, werden somit jeweils im ersten und die Programmelemente der zweiten und vierten Klasse, soweit vorhanden, jeweils im zweiten Anlagenteil der privaten Teilnehmervermittlungsanlage verwendet bzw. instanziiert.

Das erste Anlagenteil kann daher vorteilhaft in einem den Teilnehmerendeinrichtungen zugewandten Bereich eines Gebäudes und das zweite Anlagenteil in einem den Anschlüssen des externen Kommunikationsnetzes zugewandten Bereich des Gebäudes installiert werden. Dadurch resultiert ein deutlich reduzierter Installationsaufwand. Die Anschlussleitungen des externen Kommunikationsnetzes müssen daher nicht innerhalb des Gebäudes verlegt werden, was jeweils zu einem erheblichen Aufwand führen würde. Stattdessen kann eine einfach aufgebaute, drahtgebundene oder drahtlose Übertragungsvorrichtung, gegebenenfalls eine Glasfaser- oder Funkverbindung, installiert oder eine bestehende Übertragungsvorrichtung, beispielsweise eine drahtgebundene oder drahtlose Netzwerkverbindung verwendet werden. Sofern eine Verbindung eines bestehenden Netzwerks, wie es beispielsweise in [8], Andrew S. Tanenbaum, Computernetzwerke, Prentice-Hall Inc., München 1998, 3. Auflage, Seiten 17-57, beschrieben ist, verwendet wird, entfällt der Installationsaufwand weitgehend.

Die Übertragung der Anwenderdaten über die Kommunikationsverbindung erfolgt vorzugsweise mittels eines Echtzeit-Transportprotokolls. Für die Übertragung der Signalisierung dienender Dienstprimitive einschliesslich zugehöriger Argumenten über die Kommunikationsverbindung wird vorzugsweise ein weiteres Transportprotokoll verwendet.

Die Übertragung von Anwenderdaten erfolgt beispielsweise über das Real-Time Transport Protocol RTP, welches auf das User Datagram Protocol UDP gestützt ist. Die Übertragung der der Signalisierung dienenden Dienstprimitiven mit zugehörigen Argumenten erfolgt vorzugsweise über ein Transportprotokoll wie das User Datagram Protocol UDP oder das zuverlässig arbeitende Transmission Control Protocol TCP.

Nachfolgend wird die Erfindung anhand von Zeichnungen näher erläutert. Dabei zeigt:
- Figur 1: die schematische Darstellung einer bekannten privaten Teilnehmervermittlungsanlage PBX0;
- Figur 2: eine erfindungsgemässe private Teilnehmervermittlungsanlage PBX mit zwei durchgeschalteten Verbindungen;
- Figur 3: eine erfindungsgemässe private Teilnehmervermittlungsanlage, die aus zwei Anlagenteilen PBX1-2, PBX2-2 besteht;
- Figur 4: das erste Anlagenteil PBX1-2 der privaten Teilnehmervermittlungsanlage von Figur 3, in dem eine Verbindung zwischen zwei an die Benutzer-Peripherie BP angeschlossenen Teilnehmerendeinrichtungen TE_{C}, TE_{CL} durchgeschaltet ist, von denen eine Teilnehmerendeinrichtung TE_{CL} nach einem Standard, beispielsweise dem DECT-Standard, arbeitet, für den eine zusätzliche Protokolladaption notwendig ist;
- Figur 5: den Verlauf und die Konversion von Nachrichten zwischen Protokollinstanzen während eines Verbindungsaufbaus;
- Figur 6: den Verlauf und die Konversion von Nachrichten zwischen Protokollinstanzen in einer ersten Phase während des Versuchs eines Verbindungsaufbaus zu einem Teilnehmer, für den das Leistungsmerkmals CCBS (Call Completion to Busy Subscriber) vorgesehen ist; und
- Figur 7: den Verlauf und die Konversion von Nachrichten zwischen Protokollinstanzen in einer zweiten Phase während der Ausführung des Leistungsmerkmals CCBS.

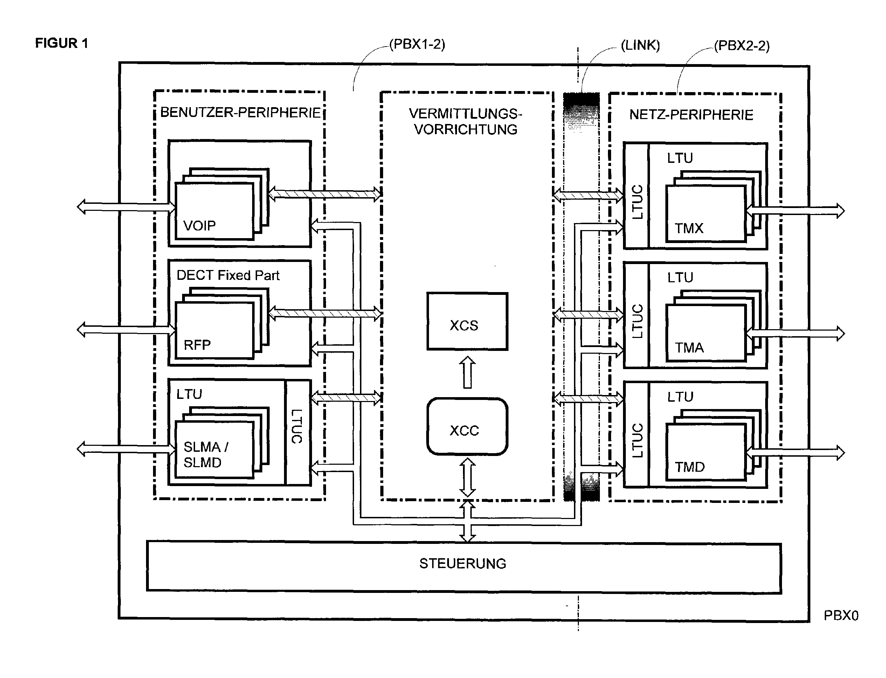

Fig. 1 zeigt die schematische Darstellung einer bekannten privaten Teilnehmervermittlungsanlage PBX0 (siehe [2}, Seite 182, Bild 5.12), in der innerhalb einer Benutzerperipherie angeordnete, analoge und digitale Teilnehmeranschluss-Baugruppen (Subscriber Line Module Analog (SLMA); Subscriber Line Module Digital (SLMD); DECT-Fixed Part -Module (siehe [3], Seite 118) und Netzwerkanschlussmodule insbesondere für den Anschluss von Teilnehmerendeinrichtungen, die nach "Voice over IP"-Protokollen arbeiten) über ein in einem Vermittlungsbereich vorgesehenes Koppelfeld XCS mit in einer Netz-Peripherie angeordneten Netzanschlusseinheiten (Line Trunk Units) LTU verbunden sind, die analoge oder digitale Leitungssatz-Baugruppen TMA, TMD, TMX und eine Steuereinheit LTUC aufweisen.

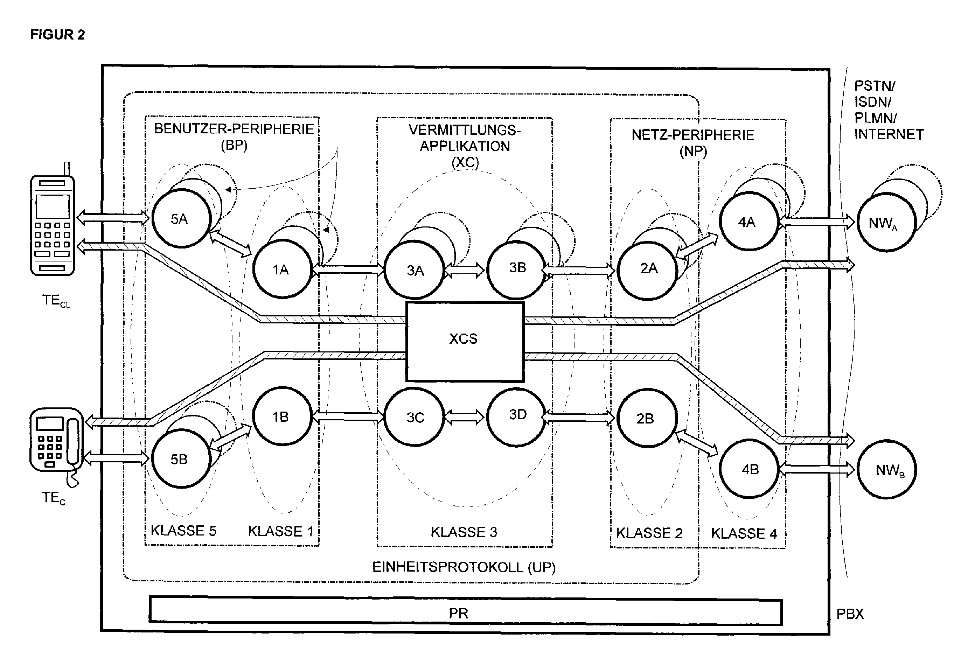

Figur 2 zeigt eine erfindungsgemässe private Teilnehmervermittlungsanlage PBX mit zwei durchgeschalteten Verbindungen, über die an die private Teilnehmervermittlungsanlage PBX angeschlossene, drahtlose bzw. drahtgebundene Teilnehmerendeinrichtungen TE_{CL}, TE_{C} mit Teilnehmerendeinrichtungen kommunizieren, die an ein externes Kommunikationsnetz, beispielsweise ein Mobilfunknetz, ein öffentliches Telefonnetz ISDN/PSTN oder das Internet, angeschlossen sind.

Aus Figur 2 ist ersichtlich, dass zur Steuerung der Vorgänge im Bereich der Benutzer-Peripherie BP, der Vermittlung XC und der Netz-Peripherie NP in fünf, gegebenenfalls mehr Klassen unterteilte Programmelemente bzw. Programmelementgruppen 1A, 1B; 2A, 2B; 3A, ..., 3D, 4A, 4B und 5A, 5B (auch Module oder Packages genannt) eines prozess- oder objektorientierten Programms implementiert wurden, welche auf ein Einheitsprotokoll UP gestützt sind. Das Einheitsprotokoll UP stellt insbesondere die für den Auf- und Abbau von Verbindungen notwendigen Dienste in Form weiterer Programmelemente, Funktionen, Prozeduren und Objekte, den Programmelementgruppen 1A, 1B; 2A, 2B; 3A, ..., 3D, 4A, 4B und 5A, 5B zur Verfügung.

Das prozess- oder objektorientierte Programm, in das das Einheitsprotokoll UP eingebunden ist, kommuniziert dabei mit den an die private Teilnehmervermittlungsanlage PBX angeschlossenen Vorrichtungen sowie mit Programmen höherer, anwenderorientierter Schichten oder Dienstprogrammen tieferer, hardwareorientierter Schichten und verfügt dazu über die notwendigen Programmelemente bzw. Programmelementgruppen 1A, 1B; 2A, 2B; 3A, ..., 3D, 4A, 4B und 5A, 5B, welche gegebenenfalls Programmelemente des Einheitsprotokolls UP umfassen.

Eine Gegenüberstellung der Eigenheiten prozess- und objektorientierter Systeme zeigt die nachstehende Tabelle:

**Tabelle 1**

| Prozessorientierte Systeme | Objektorientierte Systeme |
|---|---|
| Alle Daten sind frei für jeden Prozess verfügbar | Die Daten gehören den Objekten, welche diese Daten verbergen |
| Direkte Manipulation der Daten | Bei einer Botschaft an ein Objekt ändert dieses die Daten oder nicht |
| Das gesamte Wissen über das System steckt in jeder Prozedur | Das Wissen über das System ist über die Objekte verteilt |
| Bei einer Änderung im System müssen theoretisch alle Prozeduren überprüft werden | Bei einer Änderung im System müssen nur die Schnittstellen überprüft werden, die sich ändern |

Bei prozessorientierten Systemen steckt das gesamte Wissen über das System daher in jeder Prozedur. Bei objektorientierten Systemen ist das Wissen über das System über die Objekte verteilt. Bei der Einführung neuer Leistungsmerkmale oder einer anderweitigen Modifikation des Systems sind daher praktisch alle Prozeduren bzw. alle Objekte zu bearbeiten, was mit erheblichem Aufwand verbunden ist. Erfindungsgemäss werden daher alle für die Durchschaltung der Verbindungen, einschliesslich der Ausführung diesbezüglicher Leistungsmerkmale, erforderlichen Programmelemente durch das Einheitsprotokoll UP zur Verfügung gestellt und den Programmelementgruppen 1A, 1B; 2A, 2B; 3A, ..., 3D, 4A, 4B und 5A, 5B bedarfsweise angegliedert. Die Programmelementgruppe 5A erlaubt daher die Nutzung von Funktionalitäten (z.B. Aktivierung und Überwachung der Ein-/Ausgabeeinheiten) der zugeordneten Teilnehmerendeinrichtungen TE_{CL} und benutzt für die Durchschaltung von Verbindungen, einschliesslich der Ausführung diesbezüglicher Leistungsmerkmale die Programmelemente des Einheitsprotokolls UP. Die Programmelementgruppe 5A verfügt daher über das zur Nutzung der zugeordneten Teilnehmerendeinrichtungen TE_{CL} notwendige Wissen und wird für die Durchschaltung von Verbindungen, einschliesslich der Ausführung diesbezüglicher Leistungsmerkmale durch das Einheitsprotokoll UP unterstützt. Die Programmelementgruppe 5A muss daher jeweils nur dann überarbeitet werden, wenn sich Eigenschaften des zugeordneten Endgeräts TE_{CL} ändern. Sofern hinsichtlich der Durchschaltung von Verbindungen, einschliesslich der Ausführung diesbezüglicher Leistungsmerkmale, Änderungen ergeben, kann dies zentralisiert durch Anpassung des Einheitsprotokolls UP geschehen. Der Aufwand zur Anpassung der privaten Teilnehmervermittlungsanlage PBX an interne oder externe Veränderungen, Änderungen von Endgeräten, Kommunikationsprotokollen, oder interner Module wie das Koppelfeld XCS, ist daher minimal.

Nachstehend wird in bevorzugter Ausgestaltung eine private Teilnehmervermittlungsanlage PBX beschrieben, in der die objektorientierte Programmierung angewendet wird. Wie erwähnt, ist auch die prozessorientierte Programmierung anwendbar. Ferner sind die genannten Programmiertechniken auch ergänzend anwendbar.

Die Methodik der objektorientierten Programmierung, die gemäss [6], Kapitel 8.7.1, Seite 321 vorteilhaft anwendbar ist, ist bekanntlich stark an der menschlichen Denk- und Vorstellungswelt orientiert. Gegenstände einer Vorrichtung oder eines Systems, beispielsweise Einheiten der in Figur 1 gezeigten privaten Teilnehmervermittlungsanlage, Einheiten eines Netzwerks oder Teilnehmerendeinrichtungen, können als Objekte mit entsprechenden Funktionen oder Fähigkeiten abgebildet werden.

Objekte, die Gegenstände gleichen Typs oder gleicher Kategorie abbilden sind in Klassen geordnet. In der privaten Teilnehmervermittlungsanlage PBX von Figur 2a kommunizieren einer ersten Klasse zugeordnete Programmelementgruppen bzw. Objektgruppen 1A, 1B der Benutzerperipherie BP über zugeordnete Programmelementgruppen bzw. Objektgruppen 3A, ..., 3D einer dritten Klasse, die der Steuerung des Koppelfelds XCS dienen, mit zugeordneten Objektgruppen 2A, 2B einer zweiten Klasse der Netzperipherie NP. Die auf das Einheitsprotokoll UP gestützten Objektgruppen 1A, 1B, ... ; 2A, 2B, ... ; 3A, ..., 3D der ersten drei Klassen erlauben daher die Durchschaltung von Übertragungskanälen durch das Koppelfeld XCS. Durch die Objektgruppen 2A, 2B erfolgt ferner eine Adaption an Objektgruppen 4A, 4B einer vierten Klasse, durch die peer-to-peer (gleich zu gleich) Verbindungen mit Objekten NW_{A}; NW_{B} des externen Kommunikationsnetzes erstellbar sind.

Innerhalb der Benutzer-Peripherie BP sind die bereits oben erwähnten Objektgruppen 5A, 5B der fünften Klasse vorgesehen, durch die an die private Teilnehmervermittlungsanlage PBX anschliessbare Teilnehmerendeinrichtungen TE_{C}, TE_{CL} abgebildet bzw. deren Funktionalitäten nutzbar sind.

Die in einer privaten Teilnehmervermittlungsanlage benutzervermittlungs- und netzseitig verwendeten Signalisierungsprotokolle werden erfindungsgemäss daher durch ein Einheitsprotokoll UP ersetzt, auf dem ein prozess- oder objektorientierte Programm basiert.

Die Dienste, Funktionen oder Fähigkeiten eines Objekts bzw. des dadurch abgebildeten Gegenstandes können durch Zusendung von mit Argumenten versehenen Botschaften aktiviert werden. Nach Erhalt einer Botschaft oder eines Methodenaufrufs, wird der angeforderte Dienst durch Implementation einer entsprechenden Methode erbracht. Die Nachrichten, die zwischen den Objekten der in Figur 2 gezeigten privaten Teilnehmervermittlungsanlage PBX übertragen werden, werden nachstehend als Dienstprimitive bezeichnet, welche in [7], Kapitel 3.2.3, Seite 122 näher beschrieben sind.

Für den in Figur 5 gezeigten Aufbau und einer Verbindung werden in der privaten Teilnehmervermittlungsanlage PBX beispielsweise die nachstehend in Tabelle 2 angegebenen Dienstprimitive verwendet, die mittels eines der Adaption dienenden Objekts 2A der zweiten Klasse in Nachrichten der ISDN-Signalisierungsprotokolle gewandelt werden. Dieser einfache Verbindungsaufbau ist hinsichtlich der ISDN-seitigen Signalisierungsnachrichten in [2], Seiten 126-129 (siehe Bild 4.27) im Detail erläutert. Die in der privaten Teilnehmervermittlungsanlage PBX verwendeten Dienstprimitive werden mittels der Objekte 2A, 2B der zweiten Klasse daher entsprechend an die ISDN-Nachrichten adaptiert.

**Tabelle 2**

| Dienstprimitive der PBX | Argumente |
|---|---|
| Establish | |
| Diese Primitive wird verwendet um einen Gesprächsaufbau zu einer bestimmten Adresse einzuleiten. Argumente sind Identifikationen, Adressen, Namen der Teilnehmer und Angaben betreffend den Übertragungskanal (Art, Ressource, Ziel, Eigenschaften). | callId |
| | calledPtyAddress |
| | callingPtyAddress |
| | callingPtyName |
| | resource |
| | mediaport |
| | featureIndication |

| Establish-Ack | |
|---|---|
| Diese Primitive beschreibt die Antwort auf ein zuvor gesendetes Establish. Es wird verwendet um die Call-Id (Verbindungsidentifikation) von der Vermittlungseinheit zu erhalten. | callId |
| | OwnCallId |

| Progress | |
|---|---|
| Diese Primitive wird verwendet, um dem rufenden Gesprächsteilnehmer anzuzeigen, dass der Gesprächsaufbau vorbereitet wird und ob eine Audio-Verbindung benötigt wird, um die Gesprächsinformationen/Töne zu einem der Teilnehmer zu senden. | callId |
| | InBandInfo |
| | mediaPort |

| Dial | |
|---|---|
| Diese Primitive wird verwendet um die Wahlinformation für das Overlap dialling zu signalisieren. | callId |
| | CalledPtyAddress |

| Ringing | |
|---|---|
| Diese Primitive kennzeichnet, dass die gerufene Addresse eine Anrufsignalisierung (akustisch/optisch) aktiviert hat. | callId |
| | InbandTone |
| | MediaPort |

| Connect | |
|---|---|
| Diese Primitive wird verwendet um dem rufenden Teilnehmer anzuzeigen, dass der gerufene Teilnehmer das Gespräch entgegengenommen hat und das der Mediastream (Nutzkanal) durchgeschaltet werden kann. | callId |
| | connectedPtyAddress |
| | connectedPtyName |
| | mediaPort |

| Connect Ack | |
|---|---|
| Dieses Primitive wird verwendet um dem gerufenen Teilnehmer anzuzeigen, dass der rufende Teilnehmer den Nutzkanal durchgeschaltet hat. Die beiden Gesprächsteilnehmer sind miteinander verbunden. | callId |
| | MediaPort |

| Terminate | |
|---|---|
| Dieses Primitive wird verwendet um anzuzeigen, dass eine bestehende Verbindung zwischen mindestens zwei Gesprächsteilnehmern abgebaut wird. Auslösegrund hierfür ist, dass einer der beiden Gesprächsteilnehmer den Abbau der Verbindung eingeleitet hat. | callID |
| | terminationCause |
| | feature Indication |

| Error | |
|---|---|
| Diese Primitive wird verwendet um anzuzeigen, dass das letzte empfangene Primitive fehlerhaft oder nicht im richtigen Kontext gesendet/empfangen wurde. | callId |
| | errorCause |

Anstelle der Ankopplung an das ISDN, beispielsweise unmittelbar an Funktionseinheiten des Signalisierungssystems Nr. 7 (siehe [2], Kapitel 3.2.4, Seite 54), kann die erfindungsgemässe private Teilnehmervermittlungsanlage PBX auch an Kommunikationsnetze angekoppelt werden, die nach anderen Protokollen, beispielsweise gemäss dem Session Initiation Protokoll (SIP, siehe [4], Seite 19) arbeiten.

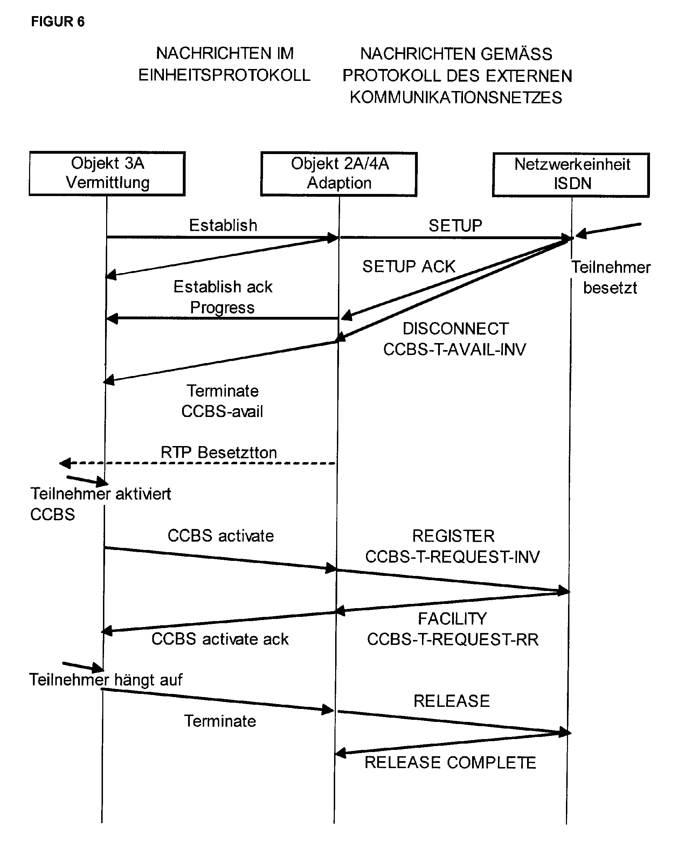

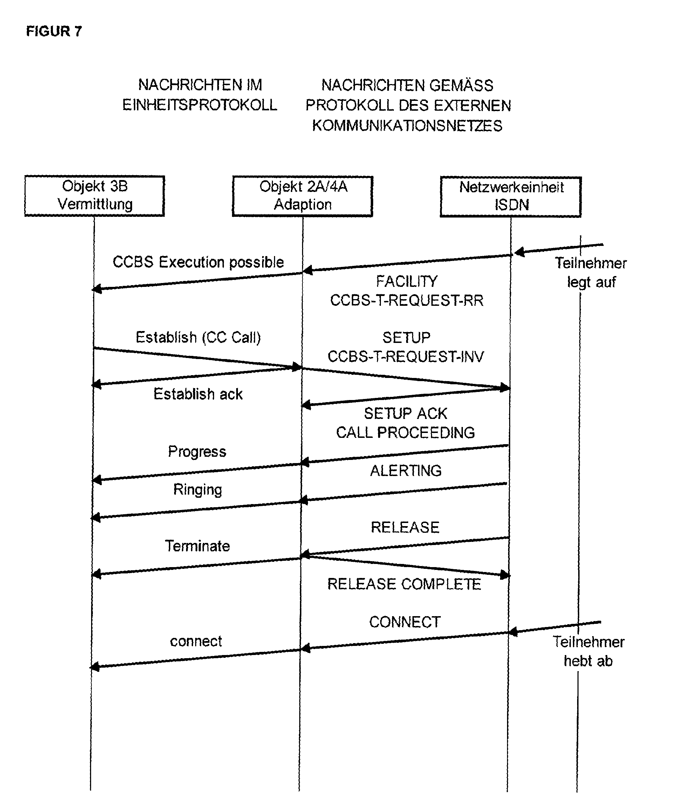

Mittels der erfindungsgemässen privaten Teilnehmervermittlungsanlage PBX lassen sich ferner zusätzliche Leistungsmerkmale wie CCBS (Call Completion for Busy Subscriber) realisieren. Figur 6 zeigt den Versuch eines Verbindungsaufbaus zu einem besetzten Teilnehmer und Figur 7 zeigt den Verbindungsaufbau, nachdem der gerufene Teilnehmern aufgelegt hat und dies dem rufenden Teilnehmer gemeldet wurde. Die dazu in der privaten Teilnehmervermittlungsanlage PBX verwendeten Dienstprimitive, die in Tabelle 3 aufgelistet sind, werden mittels den Objektgruppen 2A, 2B, ... der zweiten Klasse entsprechend an die ISDN-Nachrichten adaptiert.

**Tabelle 3**

| Dienstprimitive der PBX | Argumente |
|---|---|
| CCBS (Call Completion for Busy Subscriber) Activate | |
| Diese Primitive wird verwendet um ein CCBS Call einzuleiten und das Leistungsmerkmal zu aktivieren. Das Primitive wird immer vom rufenden Teilnehmer gesendet. | callId |
| | calledPtyAddress |
| | callingPtyAddress |

| CCBS Activate Ack | |
|---|---|
| Diese Primitive wird verwendet, um anzuzeigen, dass das angeforderte CCBS Leistungsmerkmal auf der gerufenen Seite aktiviert wurde. | callId |
| | |

| CCBS Deactivate | |
|---|---|
| Diese Primitive wird verwendet, um einen bereits eingeleiteten CCBS Call zurückzusetzen. Das Primitive wird immer vom rufenden Teilnehmer gesendet. | callId |
| | calledPtyAddress |
| | callingPtyAddress |

| CCBS Deactivate Ack | |
|---|---|
| Dieses Primitive wird verwendet, um anzuzeigen, dass das Deaktivieren eines CCBS Calls erfolgreich war. | CCBS deactivate ack |
| | callId |

In Figur 6 ist gezeigt, dass dem rufenden Teilnehmer angezeigt wird, dass das Leistungsmerkmal CCBS durch das Netzwerk unterstützt wird (CCBS-T-AVAIL-INV). Der rufende Teilnehmer aktiviert in der Folge dieses Leistungsmerkmal (CCBS activate), wonach der Antrag auf Ausführung dieses Leistungsmerkmals registriert wird (REGISTER CCBS-T-REQUEST-INV). Der Teilnehmer hängt auf und erhält, wie in Figur 7 gezeigt, nach dem Auflegen des gerufenen Teilnehmers eine entsprechende Mitteilung (CCBS Execution possible), so dass der Verbindungsaufbau zu dem nun freien Teilnehmer erfolgen kann.

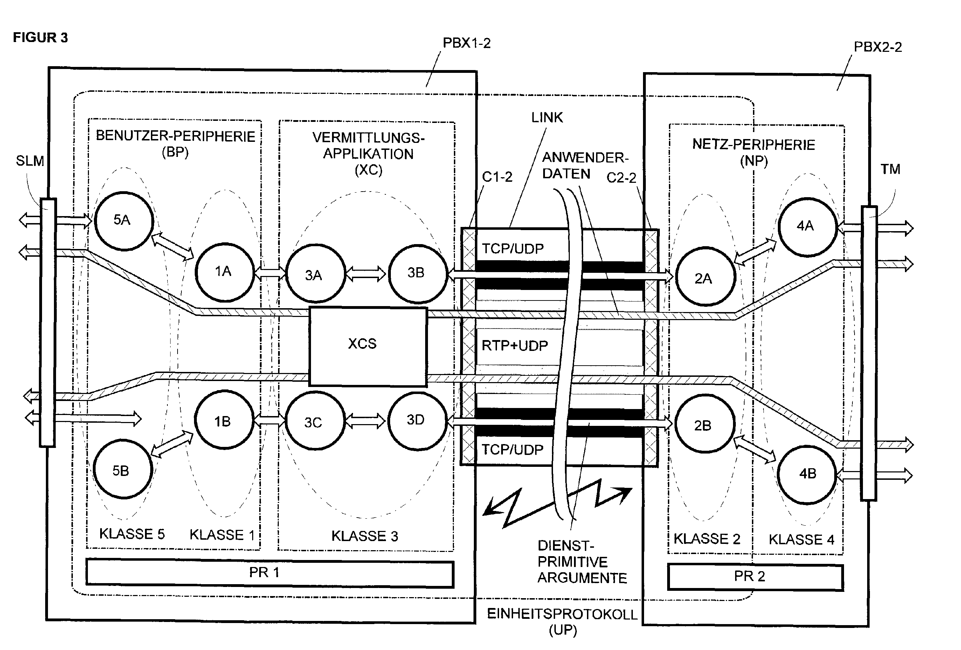

In der in Figur 3 gezeigten bevorzugten Ausgestaltung weist die private Teilnehmervermittlungsanlage ein erstes Anlagenteil PBX1-2 auf, in dem ein erster Prozessor PR1, die Benutzer-Peripherie BP mit wenigstens einer Teilnehmeranschlusseinheit und das digitale Koppelfeld XCS vorgesehen sind. Ferner weist die private Teilnehmervermittlungsanlage ein zweites Anlagenteil PBX2-2 mit der Netz-Peripherie NP auf, in der ein zweiter Prozessor PR2 und wenigstens eine Baugruppe vorgesehen sind, die an das externe Kommunikationsnetz anschliessbar ist. Die beiden Anlagenteile PXB1-2, PXB2-2 weisen je eine erste bzw. zweite Anschlussvorrichtung C1-2; C2-2 auf, die mittels einer drahtlosen oder drahtgebundenen Kommunikationsverbindung miteinander verbunden sind, über die Anwenderdaten und der Signalisierung dienende Dienstprimitive mit zugehörigen Argumenten übertragbar sind.

In beiden Anlagenteilen PBX1-2, PBX2-2 ist daher ein auf dem Einheitsprotokoll UP basierendes objektorientiertes Programm vorgesehen, welches einen der Verwaltung der Objekte dienenden Prozessmanager implementiert. Die Objekte 1A, 1B; 3A, 3B, 3C, 3D; 5A, 5B; 6A der ersten, dritten, fünften und sechsten Klasse, soweit vorhanden, werden somit jeweils im ersten und die Objekte 2A, 2B; 4A, 4B der zweiten und vierten Klasse, soweit vorhanden, jeweils im zweiten Anlagenteil PBX1-2 bzw. PBX2-2 der privaten Teilnehmervermittlungsanlage instanziiert.

Das erste Anlagenteil PBX1-2 kann daher vorteilhaft in einem den Teilnehmerendeinrichtungen TE_{C},...; TE_{CL},... zugewandten Bereich eines Gebäudes und das zweite Anlagenteil in einem den Anschlüssen des externen Kommunikationsnetzes (ISDN, Internet) zugewandten Bereich des Gebäudes installiert werden. Dadurch resultiert ein deutlich reduzierter Installationsaufwand. Die Anschlussleitungen des externen Kommunikationsnetzes müssen daher nicht innerhalb des Gebäudes verlegt werden, was jeweils zu einem erheblichen Aufwand führen würde. Stattdessen kann eine einfach aufgebaute, drahtgebundene oder drahtlose Übertragungsvorrichtung LINK, gegebenenfalls eine Glasfaseroder Funkverbindung, installiert oder eine bestehende Übertragungsvorrichtung, beispielsweise eine drahtgebundene oder drahtlose Netzwerkverbindung verwendet werden. Sofern eine Verbindung eines bestehenden Netzwerks, wie es beispielsweise in [8], Seiten 17-57, beschrieben ist, verwendet wird, entfällt der Installationsaufwand weitgehend.

Die Übertragung der Anwenderdaten über die Kommunikationsverbindung erfolgt vorzugsweise mittels eines Echtzeit-Transportprotokolls. Für die Übertragung der Signalisierung dienender Dienstprimitive einschliesslich zugehöriger Argumenten über die Kommunikationsverbindung wird vorzugsweise ein weiteres Transportprotokoll verwendet.

Die Übertragung von Anwenderdaten erfolgt beispielsweise über das Real-Time Transport Protocol RTP, welches auf das User Datagram Protocol UDP gestützt ist (siehe [5], Kapitel 29, Seiten 539-551). Die Übertragung der der Signalisierung dienenden Dienstprimitiven mit zugehörigen Argumenten erfolgt vorzugsweise über ein Transportprotokoll wie das User Datagram Protocol UDP oder das zuverlässig arbeitende Transmission Control Protocol TCP erfolgt.

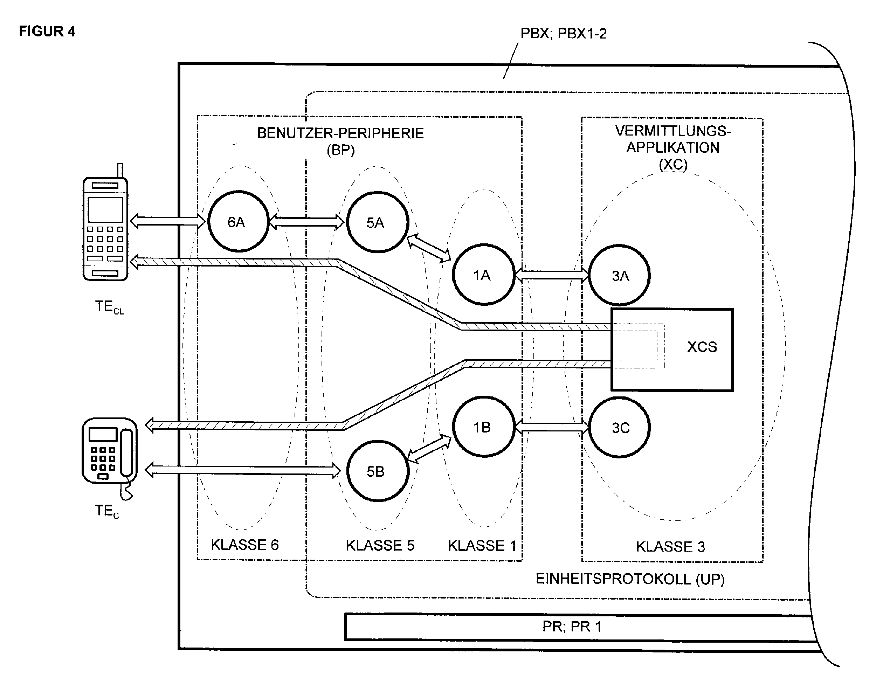

Figur 4 zeigt das erste Anlagenteil PBX1-2 der privaten Teilnehmervermittlungsanlage von Figur 3, in dem eine Verbindung zwischen zwei an die Benutzer-Peripherie BP angeschlossenen Teilnehmerendeinrichtungen TE_{C}, TE_{CL} durchgeschaltet ist. Die dem Verbindungsaufbau dienende Kommunikation zwischen den instanziierten Objekten 1A, 1B der ersten Klasse und den Teilnehmerendeinrichtungen TE_{C}, TE_{CL} erfolgt über instanziierte Objekte 5A; 5B der fünften Klasse, welche die betreffenden Teilnehmerendeinrichtungen TE_{C}, TE_{CL} repräsentieren. In Figur 4 ist ferner gezeigt, dass die Objektgruppe 5A über ein der Adaption der Steuersignale dienende Objektgruppe 6A der sechsten Klasse mit einer Schnittstelle verbunden ist, an die die zugehörige drahtlose Teilnehmerendeinrichtung TE_{CL} , beispielsweise eine DECT-Einheit angekoppelt ist.

Die erfindungsgemässe private Teilnehmervermittlungsanlage PBX; PBX1-2, PBX2-2 wurde in bevorzugten Ausgestaltungen beschrieben und dargestellt. Anhand der erfindungsgemässen Lehre sind jedoch weitere fachmännische Ausgestaltungen realisierbar. Insbesondere sind verschiedene Teilnehmerendeinrichtungen und externe Kommunikationsnetze anschliessbar. Ferner wurde erläutert, dass verschiedene auf dem Einheitsprotokoll UP basierende Softwaresysteme anwendbar sind.

Die Aufteilung der privaten Teilnehmervermittlungsanlage PBX in zwei miteinander verbundene Anlagenteile PBX1-2, PBX2-2 kann auch bei einer klassisch aufgebauten, privaten Teilnehmervermittlungsanlage PBX0 realisiert werden, wie sie Figur 1 gezeigt ist. Erfindungsgemäss wird wiederum die Netz-Peripherie durch eine drahtlose oder drahtgebundene Kommunikationsverbindung LINK vom Vermittlungsbereich und der Benutzer-Peripherie abgesetzt, so dass wiederum zwei Anlagenteile PBX1-2, PBX2-2 entstehen, die vorteilhaft installierbar sind. Bei dieser Ausgestaltung der privaten Teilnehmervermittlungsanlage PBX0 ohne Einheitsprotokoll würde die Steuerung beider Anlagenteile PBX1-2, PBX2-2 zentralisiert erfolgen, was mit einem entsprechend höheren Aufwand verbunden wäre. Trotzdem ist auch diese Ausgestaltung der privaten Teilnehmervermittlungsanlage PBX0 besonders vorteilhaft, da der durch die Installation der privaten Teilnehmervermittlungsanlage verursachte Aufwand deutlich reduziert werden kann.

### Literaturverzeichnis

[1] Jerry D. Gibson, THE COMMUNICATIONS HANDBOOK, CRC PRESS, Boca Raton 1997
[2] Peter Bocker, ISDN-Digitale Netze für Sprach-, Text-, Daten-, Video- und Multimediakommunikation, Springer Verlag, Heidelberg 1997, 4. Auflage
[3] B. Walke, Mobilfunknetze und ihre Protokolle, Band 2, B.G. Teubner Verlag, Stuttgart 2000, 2. Auflage
[4] Sean Christensen, Voice over IP solutions, Part Number 200011-002 06-01, Juniper Networks, Sunnyvale 2001
[5] Douglas E. Comer, INTERNETWORKING with TCP/IP, PRINCIPLES, PROTOCOLS, AND ARCHITECTURES, 4^{th} EDITION, Prentice Hall 2000
[6] F. Bergmann / H.-J. Gerhardt, Taschenbuch der Telekommunikation, Fachbuchverlag Leipzig, München 1999
[7] Wolf-Dieter Haaß, Handbuch der Kommunikationsnetze, Springer Verlag, Berlin 1997
[8] Andrew S. Tanenbaum, Computernetzwerke, Prentice-Hall Inc., München 1998, 3. Auflage

## Patentansprüche

1. Verfahren für den Betrieb einer mit einer Vermittlungsvorrichtung (XC) versehenen privaten Teilnehmervermittlungsanlage (PBX; PBX1-2 und PBX2-2), die einerseits mittels einer Netz-Peripherie (NP) an wenigstens ein externes Kommunikationsnetz, wie das Dienste integrierende öffentliche Telekommunikationsnetz ISDN und/oder das Internet, und andererseits mittels einer Benutzer-Peripherie (BP) an drahtgebundene oder schnurlose Teilnehmerendeinrichtungen (TE_{C}, TE_{CL}) angeschlossen ist, **dadurch gekennzeichnet, dass** der Aufbau und Abbau der Verbindungen innerhalb der Benutzer-Peripherie (BP), der Vermittlungsvorrichtung (XC) und der Netz-Peripherie (NP) mittels eines einheitlichen Protokolls (UP) realisiert wird, das in ein prozess- oder objektorientiertes Programm eingebunden ist und diesem die für den Aufbau und Abbau der Verbindungen notwendigen Dienste zur Verfügung stellt.

2. Verfahren nach Anspruch 1, **dadurch gekennzeichnet, dass** das prozess- oder objektorientierte Programm, das extern mit den an die private Teilnehmervermittlungsanlage (PBX; PBX1-2 und PBX2-2) angeschlossenen Teilnehmerendeinrichtungen (TE_{C}, TE_{CL}) und Kommunikationsnetzen und intern, direkt oder indirekt, mit hardware- oder anwenderorientierten Einheiten der privaten Teilnehmervermittlungsanlage (PBX; PBX1-2 und PBX2-2) kommuniziert, für jeden Verbindungsaufbau
a) Programmelemente (1A; 1B) einer ersten, der Benutzer-Peripherie (BP) zugeordneten Klasse verwendet, welche über Programmelemente (3A, 3B; 3C, 3D) einer dritten, der Steuerung (XC) des digitalen Koppelfeld (XCS) zugeordneten Klasse
a1) mit Programmelementen (2A; 2B) einer zweiten, der Netz-Peripherie (NP) zugeordneten Klasse oder
a2) weiteren Programmelementen der ersten Klasse (1B) derart kommuniziert,
dass für die normalerweise bidirektionale Übertragung der Anwenderdaten von einer Teilnehmerendeinrichtung (TE_{C}; TE_{CL}) zum externen Kommunikationsnetz oder zu einer weiteren Teilnehmerendeinrichtung (TE_{CL}; TE_{C}) ein durch ein digitales Koppelfeld (XCS) verlaufender Übertragungskanal erstellt wird, oder
b) Programmelemente (2A; 2B) der zweiten, der Netz-Peripherie (NP) zugeordneten Klasse verwendet, welches über Programmelemente (3A, 3B; 3C, 3D) der dritten Klasse mit Programmelementen (1A; 1B) der ersten, der Benutzer-Peripherie (NP) zugeordneten Klasse derart kommuniziert, dass für die normalerweise bidirektionale Übertragung der Anwenderdaten vom externen Kommunikationsnetz zu einer Teilnehmerendeinrichtung (TE_{C}, TE_{CL}) ein durch das digitale Koppelfeld (XCS) verlaufender Übertragungskanal erstellt wird.

3. Verfahren nach Anspruch 2, **dadurch gekennzeichnet, dass** die Kommunikation zwischen den Programmelementen (2A; 2B) der zweiten Klasse, die der Adaption von Steuersignalen dienen, und dem externen Kommunikationsnetz über Programmelemente (4A; 4B) einer vierten Klasse erfolgt, welche peer-to-peer mit Einheiten des externen Kommunikationsnetzes kommunizieren und/oder
dass die Kommunikation zwischen den Programmelementen (1A; 1B) der ersten Klasse und den Teilnehmerendeinrichtungen (TE_{C}, TE_{CL}) über Programmelemente (5A; 5B) einer fünften Klasse erfolgt, welche die betreffende Teilnehmerendeinrichtung (TE_{C}, TE_{CL}) repräsentieren und/oder
dass die Kommunikation zwischen den Programmelementen (1A; 1B) der ersten Klasse und den Teilnehmerendeinrichtungen (TE_{C}, TE_{CL}) über Programmelemente (5A; 5B) der fünften Klasse und über Programmelemente einer sechsten Klasse (6A) erfolgt, welche peer-to-peer mit den betreffenden Teilnehmerendeinrichtungen (TE_{C}, TE_{CL}) oder dazwischen geschalteten Netzwerkeinheiten kommunizieren.

4. Verfahren insbesondere nach Anspruch 1, 2 oder 3, **dadurch gekennzeichnet, dass** die Benutzer-Peripherie (BP) und die Vermittlungsvorrichtung (XC) mit den zugehörigen, auf das Einheitsprotokoll (UP) gestützten Programmelementen (1A, 1B; 3A, 3B, 3C, 3D; 5A, 5B; 6A) in einem ersten mit einem Prozessor (PR1) versehenen Anlagenteil (PBX1-2) und die Netz-Peripherie (NP) mit den zugehörigen, auf das Einheitsprotokoll (UP) gestützten Programmelementen (2A, 2B; 4A, 4B) in einem zweiten mit einem Prozessor (PR2) versehenen Anlagenteil (PBX2-2) der privaten Teilnehmervermittlungsanlage (PBX1-2 und PBX2-2) angeordnet sind, wobei die beiden Anlagenteile (PBX1-2, PBX2-2) über eine drahtlose oder drahtgebundene Kommunikationsverbindung (LINK) kommunizieren, über die gegebenenfalls auch der der Übertragung der Anwenderdaten dienende Übertragungskanal erstellt wird.

5. Verfahren nach Anspruch 4, **dadurch gekennzeichnet, dass** das erste Anlagenteil (PBX1-2) in einem den Teilnehmerendeinrichtungen zugewandten Gebäudebereich und das zweite Anlagenteil (PBX2-2) in einem den Anschlüssen des externen Kommunikationsnetzes zugewandten Gebäudebereich installiert wird.

6. Verfahren nach Anspruch 4 oder 5, **dadurch gekennzeichnet, dass** Anwenderdaten mittels eines Echtzeit-Transportprotokolls und der Signalisierung dienende Dienstprimitive mit zugehörigen Argumenten mittels eines weiteren Transportprotokolls oder mittels ISDN-Protokollen über die Kommunikationsverbindung übertragen werden.

7. Verfahren nach Anspruch 6, **dadurch gekennzeichnet, dass** die Anwenderdaten über das Real-Time Transport Protocol RTP, welches auf das User Datagram Protocol UDP gestützt ist und dass der Signalisierung dienende Dienstprimitive mit zugehörigen Argumenten über ein Transportprotokoll wie das User Datagram Protocol UDP oder das zuverlässig arbeitende Transmission Control Protocol TCP übertragen werden.

8. Private Teilnehmervermittlungsanlage (PBX; PBX1-2 und PBX2-2) zur Anwendung des Verfahrens nach einem der Ansprüche 1 bis 7 mit einer Netz-Peripherie (NP), die an wenigstens ein externes Kommunikationsnetz, wie das Dienste integrierende öffentliche Telekommunikationsnetz ISDN und/oder das Internet, anschliessbar ist, mit einer Vermittlungsvorrichtung (XC), und mit einer Benutzer-Peripherie (BP) an die drahtgebundene oder schnurlose Teilnehmerendeinrichtungen (TE_{C}, TE_{CL}) anschliessbar sind, **dadurch gekennzeichnet, dass** der Aufbau und Abbau der Verbindungen innerhalb der Benutzer-Peripherie (BP), der Vermittlungsvorrichtung (XC) und der Netz-Peripherie (NP) mittels eines einheitlichen Protokolls (UP) realisierbar ist, das in ein prozess- oder objektorientiertes Programm eingebunden ist und diesem die für den Aufbau und Abbau der Verbindungen notwendigen Dienste zur Verfügung stellt.

9. Private Teilnehmervermittlungsanlage (PBX; PBX1-2 und PBX2-2) nach Anspruch 8, **dadurch gekennzeichnet, dass** das prozess- oder objektorientierte Programm, das extern mit den an die private Teilnehmervermittlungsanlage (PBX; PBX1-2 und PBX2-2) angeschlossenen Teilnehmerendeinrichtungen (TE_{c}, TE_{CL}) und Kommunikationsnetzen und intern, direkt oder indirekt, mit hardware- oder anwenderorientierten Einheiten der privaten Teilnehmervermittlungsanlage (PBX; PBX1-2 und PBX2-2) kommuniziert, für jeden Verbindungsaufbau
a) Programmelemente (1A; 1B) einer ersten, der Benutzer-Peripherie (BP) zugeordneten Klasse verwendet, welche über Programmelemente (3A, 3B; 3C, 3D) einer dritten, der Steuerung (XC) des digitalen Koppelfeld (XCS) zugeordneten Klasse
a1) mit Programmelementen (2A; 2B) einer zweiten, der Netz-Peripherie (NP) zugeordneten Klasse oder
a2) weiteren Programmelementen der ersten Klasse (1B) derart kommuniziert,
dass für die normalerweise bidirektionale Übertragung der Anwenderdaten von einer Teilnehmerendeinrichtung (TE_{C}; TE_{CL}) zum externen Kommunikationsnetz oder zu einer weiteren Teilnehmerendeinrichtung (TE_{CL}; TE_{C}) ein durch ein digitales Koppelfeld (XCS) verlaufender Übertragungskanal erstellt wird, oder
b) Programmelemente (2A; 2B) der zweiten, der Netz-Peripherie (NP) zugeordneten Klasse verwendet, welches über Programmelemente (3A, 3B; 3C, 3D) der dritten Klasse mit Programmelementen (1A; 1B) der ersten, der Benutzer-Peripherie (NP) zugeordneten Klasse derart kommuniziert, dass für die normalerweise bidirektionale Übertragung der Anwenderdaten vom externen Kommunikationsnetz zu einer Teilnehmerendeinrichtung (TE_{C}, TE_{CL}) ein durch das digitale Koppelfeld (XCS) verlaufender Übertragungskanal erstellt wird.

10. Private Teilnehmervermittlungsanlage (PBX; PBX1-2 und PBX2-2) nach Anspruch 9, **dadurch gekennzeichnet, dass** die Kommunikation zwischen den Programmelementen (2A; 2B) der zweiten Klasse, die der Adaption von Steuersignalen dienen, und dem externen Kommunikationsnetz über Programmelemente (4A; 4B) einer vierten Klasse erfolgt, welche peer-to-peer mit Einheiten des externen Kommunikationsnetzes kommunizieren und/oder
dass die Kommunikation zwischen den Programmelementen (1A; 1B) der ersten Klasse und den Teilnehmerendeinrichtungen (TE_{C}, TE_{CL}) über Programmelemente (5A; 5B) einer fünften Klasse erfolgt, welche die betreffende Teilnehmerendeinrichtung (TE_{C}, TE_{CL}) repräsentieren und/oder
dass die Kommunikation zwischen den Programmelementen (1A; 1B) der ersten Klasse und den Teilnehmerendeinrichtungen (TE_{C}, TE_{CL}) über Programmelemente (5A; 5B) der fünften Klasse und über Programmelemente einer sechsten Klasse (6A) erfolgt, welche peer-to-peer mit den betreffenden Teilnehmerendeinrichtungen (TE_{c}, TE_{CL}) oder dazwischen geschalteten Netzwerkeinheiten kommunizieren.

11. Private Teilnehmervermittlungsanlage (PBX1-2 und PBX2-2) insbesondere nach Anspruch 8, 9 oder 10, **dadurch gekennzeichnet, dass** ein erstes Anlagenteil (PBX1-2) mit einem Prozessor (PR1), wenigstens einer Teilnehmeranschlusseinheit (SLM) und dem digitalen Koppelfeld (XCS) und ein zweites Anlagenteil (PBX2-2) mit einem Prozessor (PR2) und mit wenigstens einer Baugruppe (TM) vorgesehen sind, die an das externe Kommunikationsnetz anschliessbar ist und dass die beiden Anlagenteile (PBX1-2, PBX2-2) je eine erste bzw. zweite Anschlussvorrichtung (C1-2; C2-2) aufweisen, die mittels einer drahtlosen oder drahtgebundenen Kommunikationsverbindung (LINK) miteinander verbunden sind, über die Anwenderdaten und der Signalisierung dienende Dienstprimitive mit zugehörigen Argumenten übertragbar sind.

12. Private Teilnehmervermittlungsanlage (PBX1-2 und PBX2-2) nach Anspruch 11, **dadurch gekennzeichnet, dass** das erste Anlagenteil (PBX1-2) zur Installation in einem den Teilnehmerendeinrichtungen (TE_{C}, TE_{CL}) zugewandten Gebäudebereich und das zweite Anlagenteil (PBX2-2) zur Installation in einem den Anschlüssen des externen Kommunikationsnetzes zugewandten Gebäudebereich vorgesehen ist.

13. Private Teilnehmervermittlungsanlage (PBX1-2 und PBX2-2) nach Anspruch 10 oder 11, **dadurch gekennzeichnet, dass** für die Übertragung der Anwenderdaten über die Kommunikationsverbindung (LINK) ein Echtzeit-Transportprotokoll und für die Übertragung der Signalisierung dienender Dienstprimitive mit zugehörigen Argumenten über die Kommunikationsverbindung (LINK) ein weiteres Transportprotokoll vorgesehen ist.

14. Private Teilnehmervermittlungsanlage (PBX1-2 und PBX2-2) nach Anspruch 13, **dadurch gekennzeichnet, dass** die Übertragung der Anwenderdaten über das Real-Time Transport Protocol RTP erfolgt, welches auf das User Datagram Protocol UDP gestützt ist und dass die Übertragung der der Signalisierung dienenden Dienstprimitiven mit zugehörigen Argumenten über ein Transportprotokoll wie das User Datagram Protocol UDP oder das zuverlässig arbeitende Transmission Control Protocol TCP erfolgt.
